# EUROPEAN PATENT SPECIFICATION

(11) **EP 2 326 146 B1**
(45) Date of publication and mention of the grant of the patent: **29.10.2014**
(21) Application number: 10187428.7
(22) Date of filing: 10.03.2009
(51) Int. Cl.: H05B 37/02, H05B 39/09, H05B 39/04, B63C 9/20

(54) **A method and device for driving a light source**
Verfahren und Vorrichtung zur Ansteuerung einer Lichtquelle
Procédé et dispositif permettant de commander une source lumineuse

(30) Priority: 11.03.2008 US 64532 P
(43) Date of publication of application: 25.05.2011
(62) Divisional of application: 09720546.2
(73) Proprietor: Daniamant APS, 3550 Slangerup (DK)
(72) Inventor: Bjørn, Lars Nørgaard, 8410, Rønde (DK)
(74) Representative: Inspicos A/S

(56) References cited:
- WO-A-91/06078
- CA-C- 1 287 909
- GB-A- 2 288 890
- US-A1- 2004 105 264
- US-A1- 2006 043 911
- US-B1- 6 396 289

## Description

### FIELD OF THE INVENTION

The present invention relates to a lamp for a life jacket or raft having a battery and the light source located in a lamp housing wherein the lamp may be switched on and off by screwing and unscrewing, respectively, of the lamp housing. Alternatively, the lamp may be switched on automatically when the lamp enters water. The lamp may be used for inflatable as well as non-inflatable rigid life jackets and rafts. In particular, the present invention relates to a method and a device for driving the light source with a substantially constant drive voltage, said supply voltage being independent of an available battery voltage.

### BACKGROUND OF THE INVENTION

Life jackets and rafts which are held in readiness aboard vessels and aircraft are usually in a tightly packed condition until inflated for use. The inflation is preferably carried out automatically even though it may also be carried out manually.

Before being put into use the lamp arranged on the life jacket or raft should be switched on by supplying power from a long-storage-life battery. The lamp may be switched on manually but, of course, it is desirable that it is switched on automatically when the lamp is exposed to water.

In order to comply with international demands the lamp should be capable of flashing the light source between 50 and 70 times per minute for a period of at least 8 hours. The typical switching sequence involves that the light source is switched on in period of 0.3 s. This on-period is followed by a period of 0.7 s where the light source is switched off. During the full 8 hours the lamp should be capable of delivery a light intensity of 0.75 candela.

GB2288890 is concerned with hazard warning devices, particularly of the kind utilising an intermittently flashing warning lamp. As an initial battery level is characterised by a voltage which falls rapidly from an initially high level to the normal working level over a short period of time, possibly less than 10% of the working life of the battery, this problem is reduced by the characteristic, that the control circuit is operative to power the bulb during each operative period by the use of high frequency pulses, selected in accordance with the available voltage whereby to power the bulb during an operative period is at or close to the desired level.

CA1287909 relates to a light beacon for use on life jackets, life rafts and the like. More specifically, the present invention provides a portable light beacon having a light that operates when a water sensitive switch is immersed in water. Furthermore, it teaches of a light beacon that has a fluid sensing switch which when wet, retains its moisture and thus continues to activate the light even when the switch itself is removed from the water. Also disclosed is a portable light beacon that has a portable battery power source, such as a lithium cell powering preferably a flashing light.

It is a disadvantage of known systems that the light intensity from the lamp decreases over time. This decrease in light intensity is primarily caused by a decreasing battery voltage which in known devices may decrease up to 30% over 8 hours.

In case of for example a 3 V lithium battery, the battery voltage may decrease down to around 2 V over a period of 8 hours. Initially, the battery voltage is sufficient to drive the light source so that it generates a light intensity that exceeds international demands (0.75 candela) with a relative large margin. However, due to the decreasing battery voltage over time, the generated light intensity decreases accordingly whereby the safety margin to the required 0.75 candela is reduced as well.

It may be seen as an object of the present invention to reduce the initial margin to the required 0.75 candela in order to save energy.

It may be seen as a further object of the present invention to extend the time in which a lamp for a life jacket or a raft may be operated.

It may be seen as a still further object of the present invention to lower the start-up current in order to save energy and thereby extend the time in which the lamp may be operated.

### SUMMARY OF THE INVENTION

The above-mentioned objects are complied with by providing, in a first aspect, a method for providing a time varying supply voltage from a source of electrical power to a light source, the method comprising the steps of
- providing, to the light source, a first supply voltage in a first time period to the light source,
- determining a first available voltage level from the source of electrical power from a decay rate of a first control signal, and
- providing, to the light source, a second supply voltage in a second time period, the second supply voltage being a PWM supply voltage having a duty cycle being dependent on the first available voltage level.

Thus, according to the method of the present invention the duty cycle of a PWM supply voltage is adjusted in accordance with a measured available voltage level from the source of electrical energy.

The first and second time periods form an on-period of the light source, i.e. a time period where the light source is switched on disregarding that the pulse width modulated (PWM) supply voltage modulates the light intensity in the kHz range.

The source of electrical energy may be a battery, such as a lithium battery having a nominal terminal voltage of around 3 V. The light source may be a light bulb having a nominal voltage of 2.5 V. However, it should be noted that the nominal battery voltage and the nominal light bulb voltage may differ from the before mentioned voltages.

The method according to the present invention may be used in lamps adapted to be attached to or integrated with life jackets and/or rafts. As previously stated life jackets and rafts are held in readiness aboard vessels and aircraft in a tightly packed condition until inflated for use. The inflation is preferably carried out automatically even though it may also be carried out manually. Before being put into use the lamp arranged on or integrated with a life jacket or raft must be switched on by supplying power from a long-storage-life battery.

A lamp typically comprises a water proof housing, a battery, a light bulb, a PCB and a switch which automatically activates the lamp when the lamp is exposed to water. Alternatively, the lamp may be activated manually.

Preferably, the second time period immediately follows the first period. The duration of the first time period plus the second time period may be shorter than 0.5 s, such as shorter than 0.4 s, such as approximately 0.3 s. The second time period may be followed by an intermediate time period during which no supply voltage is applied to the light source, i.e. the light source is switched off. The intermediate time period may have a duration within the range 0.5 - 0.9 s, such as within the range 0.6 - 0.8 s, such as approximately 0.7 s.

Preferably, the lamp should be capable of flashing the light bulb between 50 and 70 times per minute for a period of at least 8 hours. A typical switching sequence involves that the light bulb is switched on for a period of 0.3 s. This on-period is followed by a period of 0.7 s where the light source is switched off.

The method according to the present invention may further comprise the steps of
- providing, to the light source, a third supply voltage in a third time period,
- determining a second available voltage level from the source of electrical power from a decay rate of a second control signal, and
- providing, to the light source, a fourth supply voltage in a fourth time period, the fourth supply voltage being a PWM supply voltage having a duty cycle being dependent on the second available voltage level.

Thus, after the intermediate time period, where the light source is switched off the light source is switched on again by applying third and fourth supply voltages to the light source.

The first and second control signals may be respective measures of the first and second available voltage levels from the source of electrical power.

The PWM supply voltage may have a frequency within the range 5-20 kHz. However, other frequency ranges are also applicable. The first and second available voltage levels from the source of electrical power may be within the range 1 - 5 V, such as within the range 1.5 - 4 V. However, other voltage ranges are also applicable. The RMS value of the PWM supply voltage may be within the range 1.5 - 2.5 V. However, other voltage ranges are also applicable.

In a second aspect the present invention relates to a lamp for a life jacket or raft, the lamp comprising an electronic system for providing a time varying supply voltage from a source of electrical power to a light source, the electronic system comprising
- means for providing, to the light source, a first supply voltage in a first time period,
- means for determining a first available voltage level from the source of electrical power from a decay rate of a first control signal, and
- means for providing, to the light source, a second supply voltage in a second time period, the second supply voltage being a PWM supply voltage having a duty cycle being dependent on the first available voltage level.

The light source may comprise a light bulb, Preferably, the means for providing the first supply voltage and the means for providing the PWM supply voltage involve the same controllable switching element, said controllable switching element comprising a MOSFET.

In a third aspect the present invention relates to an electronic system for providing a time varying supply voltage from a source of electrical power to a light source, the system comprising
- means for providing, to the light source, a first supply voltage in a first time period,
- means for determining a first available voltage level from the source of electrical power from a decay rate of a first control signal, and
- means for providing, to the light source, a second supply voltage in a second time period, the second supply voltage being a PWM supply voltage having a duty cycle being dependent on the first available voltage level.

Again, the light source may comprise a light bulb. Preferably, the means for providing the first supply voltage and the means for providing the PWM supply voltage involve the same controllable switching element, said controllable switching element comprising a MOSFET.

### BRIEF DESCRIPTION OF THE INVENTION

The present invention will now be explained in further details with reference to the accompanying figures, wherein
- Fig. 1: shows a comparison between prior art and the present invention,
- Fig. 2: shows a lamp for a life jacket or a raft,
- Fig. 3: shows a sequence of two pulses,
- Fig. 4: shows an ignition pulse followed by PWM supply voltage,
- Fig. 5: shows an ignition pulse followed by mean supply voltage,
- Fig. 6: shows the electronics of the lamp,
- Fig. 7: shows a first part of the electronics,
- Fig. 8: shows an increasing capacitor voltage, and
- Fig. 9: shows a second part of the electronics.

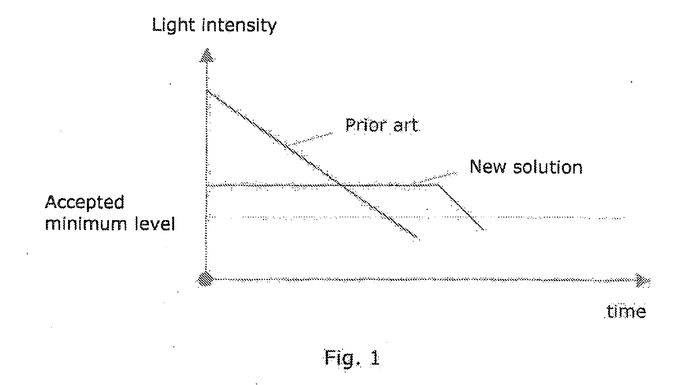

While the invention is susceptible to various modifications and alternative forms, specific embodiments have been shown by way of example in Figs. 1-9 and will be described in details herein. It should be understood, however, that the

### DETAILED DESCRIPTION OF THE INVENTION

The aim of the present invention is depicted in Fig. 1 where the light intensity of a lamp for a life jacket or a raft is depicted as a function of time. The required light intensity level is illustrated by the horizontal arranged line. According to prior art systems the light intensity decreases with time. As depicted in Fig. 1 (line denoted "old solution") the light intensity drops below the required minimum level after a certain period of time. However, at the beginning of the period, the light intensity is unnecessary high. Thus, energy may be saved by lowering the light intensity in the beginning of the period.

The principle of the present invention is depicted by the line "new solution". As seen in Fig. 1 the light intensity is lowered in the beginning of the period whereby the light intensity can be kept above the required minimum level over a longer period of time. This is accomplished by providing an essentially constant supply voltage level to the light source during the full functional period, and by applying PWM to keep the supply voltage essentially constant even though an available battery voltage decreases during the functional period.

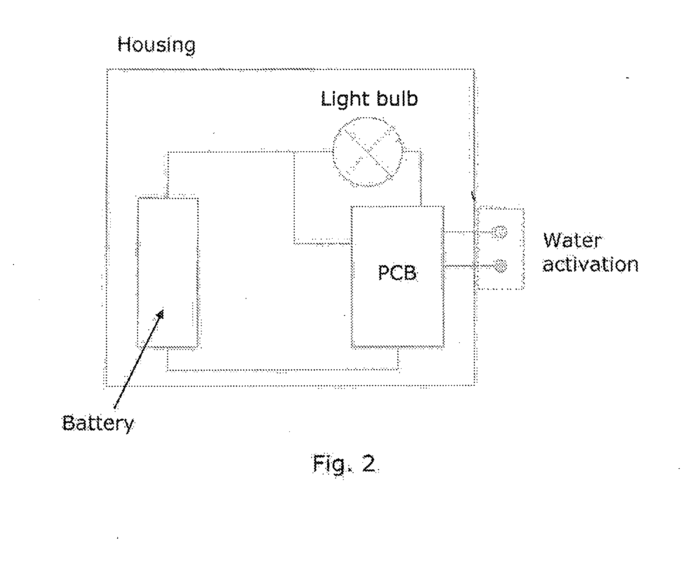

The lamp for a life jacket or a raft is depicted in Fig. 2. As seen the lamp comprises a housing which should be water proof, a battery, a light bulb, a PCB and a switch which automatically activates the lamp when the lamp is exposed to water. Alternatively, the lamp may be activated manually.

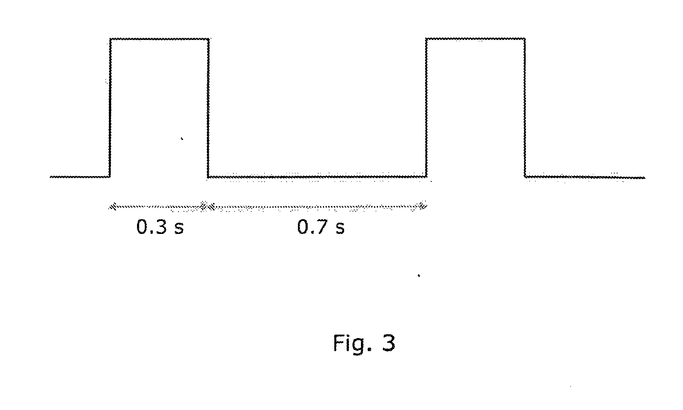

As previously mentioned the lamp should be capable of flashing the light bulb between 50 and 70 times per minute for a period of at least 8 hours. The typical switching sequence involves that the light bulb is switched on for a period of 0.3 s. This on-period is followed by a period of 0.7 s where the light source is switched off. The supply voltage is depicted in Fig. 3. During the full 8 hours the lamp should be capable of delivery a light intensity of 0.75 candela.

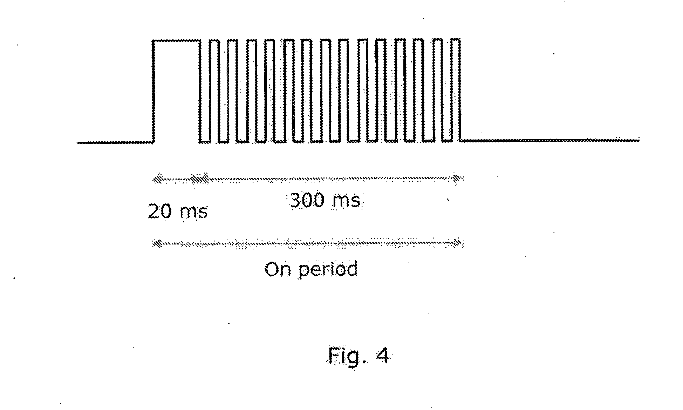

According to one embodiment of the present invention each on-period comprises a relatively long first pulse followed by a period of short pulses. As depicted in Fig. 4 the long pulse can have a duration of around 20 ms. The frequency of the short pulses is typically around 10 kHz. The first long pulse serves as an effective ignition of the light bulb in that the light bulb, during the long pulse, is directly connected to the battery. During the first long pulse the available battery voltage level is determined. When the available battery voltage level is known the duty cycle of the short pulses can be adjusted so that a predetermined mean voltage value can be applied to the light bulb. Thus, by constantly adjusting the duty cycle of the short pulses to the available battery voltage a substantially constant voltage can be applied to the light bulb.

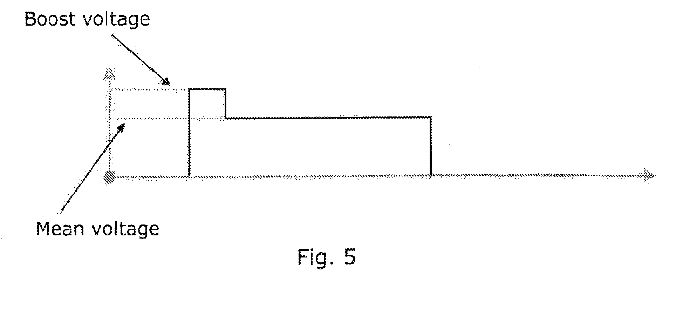

The voltage across the light bulb during the on-period is depicted in Fig. 5. As seen a boost voltage, which equals the available battery voltage, is applied to ignite the light bulb in an effect manner. The boost voltage is followed by a PWM supply voltage typically having a lower RMS value than the boost/battery voltage.

To exemplify the method according to the present invention the initial battery voltage may be around 3 V supplied by a lithium battery. Over a period of 8 hours the battery voltage may decrease to for example 2.5 V. The light bulb may have a nominal voltage around 2.5 V. However, a supply voltage to the light bulb of 2 V may be sufficient to generate the required 0.75 candela in light intensity. Thus, according to the present invention the available battery voltage is determined at the beginning of each on-period, and the duty cycle of the PWM supply voltage is adjusted to obtain a RMS supply voltage of 2 V for each on-period.

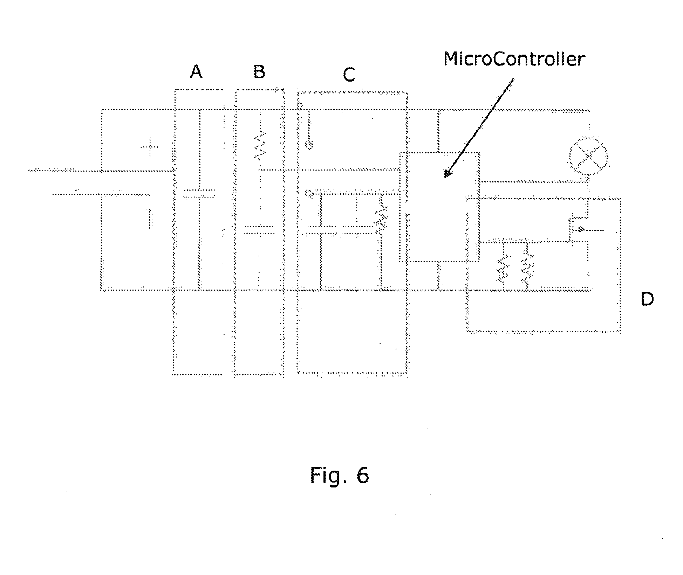

The PCB - cf. Fig. 2 - of the lamp comprises a microcontroller for controlling the electronics of the lamp. The various parts of the PCB are shown in Fig. 6. Part A comprises a capacitor which is connected across the terminals of the battery.

The capacitor is incorporated in order to lower the current draw from the battery when activating the lamp. A typical light bulb has an impedance of 0.6 Ω when turned on. If such a typical light bulb is connected to a 3 V lithium battery the start-up current approaches 5 A. However, after 10-30 ms the light bulb impedance increases to around 6 Ω. When a high peak current is drawn from the battery its internal impedance increases and the voltage across the battery terminals drops. If a capacitor is position as shown in Fig. 6, the light bulb turns on faster since the internal impedance of the battery and thereby the voltage drop is lower. The capacitance of the capacitor may be of varying sizes, such as between 100µF and 10F.

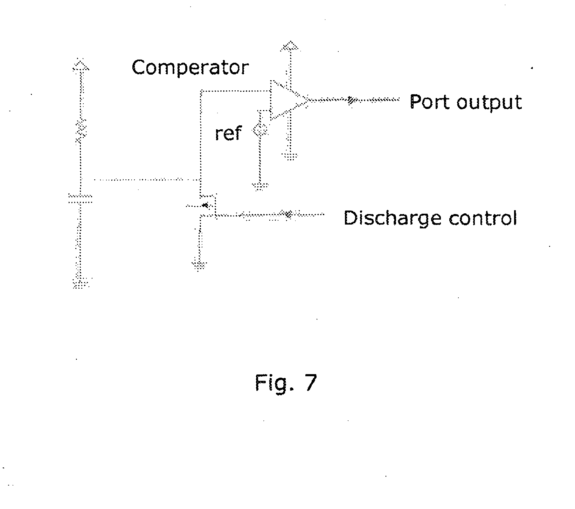

Part B of Fig. 6 is shown in greater details in Fig. 7. Part B is a voltage measurement circuit used to determine the available battery voltage during load conditions, i.e. when the light bulb is switched on. As previously mentioned the available battery voltage is determined in order to adjust the PWM supply voltage so as to ensure that an essentially constant supply voltage is applied to the light bulb via the port output, which is directly connected to the MOSFET of part D - cf. Fig. 6.

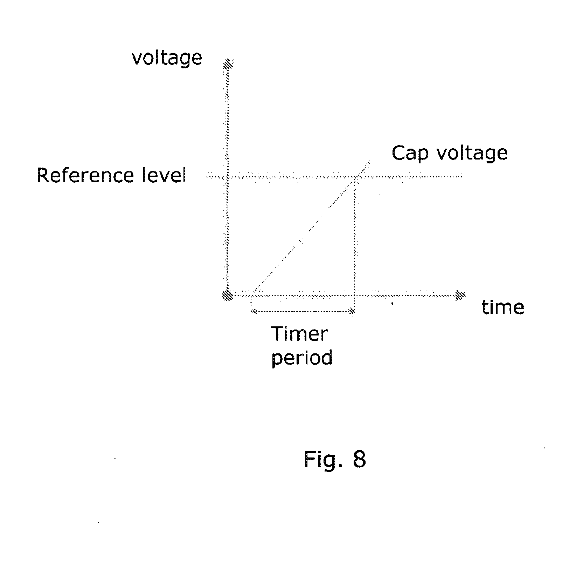

The voltage measurement circuit works as follows. The discharge control ensures that the capacitor is discharged. When the discharge control is released the voltage across the capacitor in Fig. 7 starts to increase. At the same time an internal timer is started. When the voltage across the capacitor reaches a reference level the comparator goes high and the timer stops. The available battery voltage can now be calculated. The increasing capacitor voltage is depicted in Fig. 8.

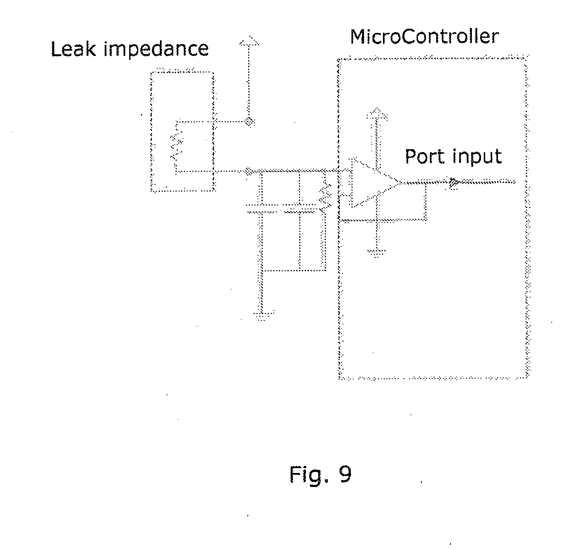

In case the lamp is automatically activated, i.e. automatically activated when it is exposed to water, an electric circuit as depicted in Fig. 9 can, among other circuits, be applied. When the water activation pads are exposed to water a small leakage current arises. This small leakage current causes the logic to go high whereby the lamp is turned on.

The lamp may optionally be equipped with additional functionalities, such as a self test functionality and a flash rescue functionality.

Firstly, the self test functionality may be implemented in various ways - only one of these implementations is disclosed in the following. When the lamp is manually switched on the electronics of the lamp performs a controlled load test using the light bulb. Prior to performing the controlled load test the available battery voltage is determined. Similarly, the available battery voltage is determined after the controlled load test. If the determined voltage levels (voltage levels before and after load test) fall within accepted ranges, the product is approved. However, if the determined voltage levels do not fall within the accepted ranges, the light bulb flashes for example 5 times to indicate that the lamp does not function properly.

Secondly, the flash rescue functionality is used after the lamp has functioned normally 8-12 hours. When the battery voltage goes below a critical level of for example 2 V, normal function of the lamp is terminated. Due to regeneration and recovery of the battery voltage, the battery voltage will typically increase to 2.3 V to 2.4 V if no load is applied to the battery terminals. The regeneration and recovery of the battery voltage is sufficient for flashing the light bulb for example 100 ms every 10 seconds. Thus, after normal operation for at least 8 hours the lamp switch to the flash rescue functionality where the light bulb is turned on for example 100 ms every 10 seconds.

## Claims

1. A lamp for a life jacket or a raft being automatically activable when it is exposed to water, said lamp comprising a light source, an electric circuit and water activation pads, wherein the electronic circuit is arranged to activate the light source when the water activation pads are exposed to water and a leakage current arises between the pads.

2. A lamp according to claim 1, wherein the electric circuit is adapted to detect a small leakage current between the water activation pads, and activate the light source in response thereto.

3. A lamp according to claim 2, wherein the small leakage current causes the logic to go high whereby the light source is activated.

4. A lamp according to any of claims 1-3, further comprising an electronic system adapted to provide a time varying supply voltage from a source of electrical power to the light source so as to activate said light source, the electronic system comprising
- means for providing, to the light source, a first supply voltage in a first time period,
- means for determining a first available voltage level from the source of electrical power from a decay rate of a first control signal, and
- means for providing, to the light source, a second supply voltage in a second time period, the second supply voltage being a PWM supply voltage having a duty cycle being dependent on the first available voltage level.

5. A lamp according to claim 4, wherein the means for providing the first supply voltage and the means for providing the PWM supply voltage involves the same controllable switching element, such as a MOSFET.

6. A method for automatically activating a light source of a lamp for a life jacket or a raft when said lamp is exposed to water, wherein said lamp comprises a light source, an electric circuit and water activation pads, the method comprising the step of activating, using the electronic circuit, the light source when the water activation pads are exposed to water causing a leakage current to arise between the pads.

7. A method according to claim 6, wherein the electric circuit is adapted to detect a small leakage current between the water activation pads, and activate the light source in response thereto.

8. A method according to claim 7, wherein the small leakage current causes the logic to go high whereby the light source is activated.

9. A method according to any of claims 6-8, wherein the step of activating the light source comprises the steps of
- providing, to the light source, a first supply voltage in a first time period,
- determining a first available voltage level from a source of electrical power from a decay rate of a first control signal, and
- providing, to the light source, a second supply voltage in a second time period, the second supply voltage being a PWM supply voltage having a duty cycle being dependent on the first available voltage level.

10. A method according to claim 9, wherein the second time period follows the first period.

11. A method according to claim 9 or 10, wherein the duration of the first time period plus the second time period is shorter than 0.5 s, such as shorter than 0.4 s, such as approximately 0.3 s.

12. A method according to any of claims 9-11, wherein the second time period is followed by an intermediate time period, the light source being switched off during said intermediate time period which has a duration within the range 0.5 - 0.9 s, such as within the range 0.6 - 0.8 s, such as approximately 0.7 s.

13. A method according to claim 12, further comprising the steps of
- providing, to the light source, a third supply voltage in a third time period,
- determining a second available voltage level from the source of electrical power from a decay rate of a second control signal, and
- providing, to the light source, a fourth supply voltage in a fourth time period, the fourth supply voltage being a PWM supply voltage having a duty cycle being dependent on the second available voltage level.

14. A method according to claim 13, wherein the first and second control signals are respective measures of the first and second available voltage levels from the source of electrical power.

15. A method according to any of claims 9-14, wherein the PWM supply voltage has a frequency within the range 5-10 kHz.

## Patentansprüche

1. Lampe für eine Rettungsweste oder ein Floß, welche automatisch aktivierbar ist, wenn sie Wasser ausgesetzt ist, wobei die Lampe eine Lichtquelle, eine elektrische Schaltung und durch Wasser aktivierte Kissen umfasst, wobei die elektronische Schaltung ausgelegt ist, um die Lichtquelle zu aktivieren, wenn die Wassereinschaltkissen mit Wasser in Berührung kommen und ein Fehlerstrom zwischen den Kissen auftritt.

2. Lampe nach Anspruch 1, wobei die elektrische Schaltung ausgelegt ist, um einen kleinen Fehlerstrom zwischen den durch Wasser aktivierten Kissen zu erfassen und die Lichtquelle als Reaktion darauf zu aktivieren.

3. Lampe nach Anspruch 2, wobei der kleine Fehlerstrom die Logik veranlasst, auf hoch zu stellen, wodurch die Lichtquelle aktiviert wird.

4. Lampe nach einem beliebigen der Ansprüche 1-3, des Weiteren umfassend ein elektronisches System, welches ausgelegt ist, um eine über die Zeit variable Versorgungsspannung von einer elektrischen Stromquelle zur Lichtquelle bereitzustellen, um so die Lichtquelle zu aktivieren, wobei das elektronische System umfasst:
- Mittel zum Bereitstellen für die Lichtquelle einer ersten Versorgungsspannung in einer ersten Zeitperiode,
- Mittel zum Bestimmen eines ersten verfügbaren Spannungsniveaus der elektrischen Stromquelle von einer ersten Abklingrate des ersten Steuersignals, und
- Mittel zum Bereitstellen für die Lichtquelle einer zweiten Versorgungsspannung in einer zweiten Zeitperiode, wobei die zweite Versorgungsspannung eine Pulsweitenmodulations(PWM)-Versorgungsspannung mit einem Lastzyklus ist, welcher vom ersten verfügbaren Spannungsniveau abhängig ist.

5. Lampe nach Anspruch 4, wobei die Mittel zum Bereitstellen der ersten Versorgungsspannung und die Mittel zum Bereitstellen der PWM-Versorgungsspannung das gleiche steuerbare Schaltelement wie ein MOSFET umfasst.

6. Verfahren zum automatischen Aktivieren einer Lichtquelle für eine Rettungsjacke oder ein Floß, wenn die Lampe dem Wasser ausgesetzt ist, wobei die Lampe eine Lichtquelle, eine elektrische Schaltung und durch Wasser aktivierte Kissen umfasst, wobei das Verfahren den Schritt des Aktivierens der Lichtquelle unter Verwendung der elektronischen Schaltung umfasst, wenn die durch Wasser aktivierten Kissen mit Wasser in Berührung kommen und ein Fehlerstrom zwischen den Kissen auftritt.

7. Verfahren nach Anspruch 6, wobei die elektrische Schaltung ausgelegt ist, um einen kleinen Fehlerstrom zwischen den durch Wasser aktivierten Kissen zu erfassen und die Lichtquelle als Reaktion darauf zu aktivieren.

8. Verfahren nach Anspruch 7, wobei der kleine Fehlerstrom die Logik veranlasst, auf High zu stellen, wodurch die Lichtquelle aktiviert wird.

9. Verfahren nach einem beliebigen der Ansprüche 6-8, wobei der Schritt des Aktivierens der Lichtquelle die Schritte umfasst:
- Bereitstellen für die Lichtquelle einer ersten Versorgungsspannung in einer ersten Zeitperiode,
- Bestimmen eines ersten verfügbaren Spannungsniveaus von einer Quelle des elektrischen Stroms von einer ersten Abklingrate eines ersten Steuersignals, und
- Bereitstellen für die Lichtquelle einer zweiten Versorgungsspannung in einer zweiten Zeitperiode, wobei die zweite Versorgungsspannung eine PWM-Versorgungsspannung mit einem Lastzyklus ist, welcher vom ersten verfügbaren Spannungsniveau abhängig ist.

10. Verfahren nach Anspruch 9, wobei die zweite Zeitperiode auf die erste Periode folgt.

11. Verfahren nach Anspruch 9 oder 10, wobei die Dauer der ersten Zeitperiode plus der zweiten Zeitperiode kürzer ist als 0,5 s, wie kürzer als 0,4 s, wie ungefähr 0,3 s.

12. Verfahren nach einem beliebigen der Ansprüche 9-11, wobei der zweiten Zeitperiode eine Zwischenzeitperiode folgt, wobei die Lichtquelle während dieser Zwischenzeitperiode, welche eine Dauer im Bereich von 0,5 - 0,9 s, wie innerhalb eines Bereichs von 0,6 - 0,8 s, wie ungefähr 0,7 s, aufweist, abgeschaltet wird.

13. Verfahren nach Anspruch 12, des Weiteren umfassend die Schritte:
- Bereitstellen für die Lichtquelle einer dritten Versorgungsspannung in einer dritten Zeitperiode,
- Bestimmen eines zweiten verfügbaren Spannungsniveaus der elektrischen Stromquelle von einer Abklingrate eines ersten Steuersignals, und
- Bereitstellen für die Lichtquelle einer vierten Versorgungsspannung in einer vierten Zeitperiode, wobei die vierte Versorgungsspannung eine PWM-Versorgungsspannung mit einem Lastzyklus ist, welcher vom zweiten verfügbaren Spannungsniveau abhängig ist.

14. Verfahren nach Anspruch 13, wobei das erste und das zweite Steuersignal jeweils Maße des ersten beziehungsweise des zweiten verfügbaren Spannungsniveaus der elektrischen Stromquelle sind.

15. Verfahren nach einem beliebigen der Ansprüche 9-14, wobei die PWM-Versorgungsspannung eine Frequenz im Bereich von 5-10 kHz aufweist.

## Revendications

1. Lampe pour un gilet de sauvetage ou un radeau de survie qui est activable automatiquement lorsqu'elle est exposée à l'eau, ladite lampe comprenant une source lumineuse, un circuit électrique et des plots d'activation par l'eau, dans laquelle le circuit électronique est agencé pour activer la source lumineuse lorsque les plots d'activation par l'eau sont exposés à l'eau et un courant de fuite survient entre les plots.

2. Lampe selon la revendication 1, dans laquelle le circuit électrique est apte à détecter un petit courant de fuite entre les plots d'activation par l'eau, et à activer la source lumineuse en réponse à celui-ci.

3. Lampe selon la revendication 2, dans laquelle le petit courant de fuite fait passer la logique en haut, ce qui active la source lumineuse.

4. Lampe selon l'une quelconque des revendications 1 à 3, comprenant en outre un système électronique apte à fournir une tension d'alimentation variable dans le temps d'une source d'énergie électrique à la source lumineuse de manière à activer ladite source lumineuse, le système électronique comprenant :
- des moyens pour fournir, à la source lumineuse, une première tension d'alimentation au cours d'une première période de temps,
- des moyens pour déterminer un premier niveau de tension disponible depuis la source d'énergie électrique à partir d'un taux de déclin d'un premier signal de commande, et
- des moyens pour fournir, à la source lumineuse, une deuxième tension d'alimentation au cours d'une deuxième période de temps, la deuxième tension d'alimentation étant une tension d'alimentation à modulation de largeur d'impulsion, PWM, dont le rapport cyclique dépend du premier niveau de tension disponible.

5. Lampe selon la revendication 4, dans laquelle les moyens pour fournir la première tension d'alimentation et les moyens pour fournir la tension d'alimentation PWM impliquent le même élément de commutation pouvant être commandé, comme un MOSFET.

6. Procédé pour activer automatiquement une source lumineuse d'une lampe pour un gilet de sauvetage ou un radeau de survie lorsque ladite lampe est exposée à l'eau, dans lequel ladite lampe comprend une source lumineuse, un circuit électrique et des plots d'activation par l'eau, le procédé comprenant l'étape de l'activation, en utilisant le circuit électronique, de la source lumineuse lorsque les plots d'activation par l'eau sont exposés à l'eau en provoquant un courant de fuite entre les plots.

7. Procédé selon la revendication 6, dans lequel le circuit électrique est apte à détecter un petit courant de fuite entre les plots d'activation par l'eau, et à activer la source lumineuse en réponse à celui-ci.

8. Procédé selon la revendication 7, dans lequel le petit courant de fuite fait passer la logique en haut, ce qui active la source lumineuse.

9. Procédé selon l'une quelconque des revendications 6 à 8, dans lequel l'étape de l'activation de la source lumineuse comprend les étapes de :
- fournir, à la source lumineuse, une première tension d'alimentation au cours d'une première période de temps,
- déterminer un premier niveau de tension disponible depuis une source d'énergie électrique à partir d'un taux de déclin d'un premier signal de commande, et
- fournir, à la source lumineuse, une deuxième tension d'alimentation au cours d'une deuxième période de temps, la deuxième tension d'alimentation étant une tension d'alimentation à modulation de largeur d'impulsion, PWM, dont le rapport cyclique dépend du premier niveau de tension disponible.

10. Procédé selon la revendication 9, dans lequel la deuxième période de temps suit la première période.

11. Procédé selon la revendication 9 ou 10, dans lequel la durée de la première période de temps plus la deuxième période de temps est inférieure à 0,5 s, comme inférieure à 0,4 s, comme approximativement 0,3 s.

12. Procédé selon l'une quelconque des revendications 9 à 11, dans lequel la deuxième période de temps est suivie d'une période de temps intermédiaire, la source lumineuse étant mise hors tension au cours de ladite période de temps intermédiaire qui a une durée dans la plage de 0,5 à 0,9 s, comme dans la plage de 0,6 à 0,8 s, comme approximativement 0,7 s.

13. Procédé selon la revendication 12, comprenant en outre les étapes de :
- fournir, à la source lumineuse, une troisième tension d'alimentation au cours d'une troisième période de temps,
- déterminer un deuxième niveau de tension disponible depuis la source d'énergie électrique à partir d'un taux de déclin d'un deuxième signal de commande, et
- fournir, à la source lumineuse, une quatrième tension d'alimentation au cours d'une quatrième période de temps, la quatrième tension d'alimentation étant une tension d'alimentation PWM dont le rapport cyclique dépend du deuxième niveau de tension disponible.

14. Procédé selon la revendication 13, dans lequel les premier et deuxième niveaux de commande sont des mesures respectives des premier et deuxième niveaux de tension disponible depuis la source d'énergie électrique.

15. Procédé selon l'une quelconque des revendications 9 à 14, dans lequel la tension d'alimentation PWM a une fréquence dans la plage de 5 à 10 kHz.
